# EUROPÄISCHE PATENTSCHRIFT

(11) **EP 2 257 156 B1**
(45) Veröffentlichungstag und Bekanntmachung des Hinweises auf die Patenterteilung: **26.12.2012**
(21) Anmeldenummer: 09715753.1
(22) Anmeldetag: 17.02.2009
(51) Int. Cl.: A01N 25/04, A01N 43/38

(54) **SUSPENSIONSKONZENTRATE AUF ÖLBASIS**
OIL-BASED SUSPENSION CONCENTRATES
SUSPENSIONS CONCENTRÉES À BASE D'HUILE

(30) Priorität: 25.02.2008 EP 08151880
(43) Veröffentlichungstag der Anmeldung: 08.12.2010
(73) Patentinhaber: Bayer CropScience Aktiengesellschaft, 40789 Monheim (DE)
(72) Erfinder: VERMEER, Ronald, 40789 Monheim (DE); EBERHARD, Manuela, 51371 Leverkusen (DE); KÜHNHOLD, Jürgen, 51467 Bergisch Gladbach (DE)
(86) Internationale Anmeldenummer: PCT/EP2009/001087
(87) Internationale Veröffentlichungsnummer: WO 2009/106247

(56) Entgegenhaltungen:
- WO-A-03/000053
- WO-A-2005/084441
- WO-A-2008/031512

## Beschreibung

Die vorliegende Erfindung betrifft neue, ölbasierte Suspensionskonzentrate von cyclischen Ketoenolen der Formel (I), ein Verfahren zur Herstellung dieser Formulierungen sowie deren Verwendung zur Applikation der enthaltenen cyclischen Ketoenole der Formel (I) auf Pflanzen und/oder deren Lebensraum und zur Bekämpfung von Insekten.

Es ist bereits bekannt, dass bestimmte cyclische Ketoenole insektizide und/oder akarizide Eigenschaften besitzen (siehe z.B. WO 98/05638 und WO 04/007448). Auch sind bereits zahlreiche wasserfreie Suspensionskonzentrate von agrochemischen Wirkstoffen bekannt geworden. So werden in EP-A 0 789 999 Formulierungen dieses Typs beschrieben, die neben Wirkstoff und Öl ein Gemisch verschiedener Tenside - darunter auch solche, die als Penetrationsförderer dienen - sowie ein hydrophobiertes Alumoschichtsilikat als Verdickungsmittel enthalten. Die Stabilität dieser Zubereitungen ist gut. Nachteilig ist aber, dass zwingend ein Verdickungsmittel vorhanden ist, denn dadurch wird die Herstellung aufwendiger. Außerdem absorbiert das Verdickungsmittel jeweils einen Teil der zugesetzten Menge an Penetrationsförderer, der deshalb für seine eigentliche Funktion nicht zur Verfügung steht.

In WO 03/000053 werden Formulierungen dieses Typs beschrieben, die neben Wirkstoff und Öl ein Gemisch verschiedener Tenside, - darunter auch solche, die als Penetrationsförderer dienen -, enthalten. Die beschriebenen Formulierungen brauchen zur Stabilisierung kein Verdickungsmittel. In dieser Publikation wird die synergistische Wirkung von Pflanzenölen und Penetrationsförderern hervorgehoben. Vorteil dieser Formulierungen ist, dass deren Herstellung weniger aufwendig ist als die Zubereitung entsprechender Formulierungen, in denen Verdickungsmittel vorhanden sind. Allerdings werden keinerlei cyclische Ketoenole der Formel (I) genannt.

In der WO 05/084441 werden Formulierungen dieses Typs beschrieben, die neben bestimmten cyclischen Ketoenolen und Öl einen Penetrationsförderer enthalten. Als besonders bevorzugte Penetrationsförderer werden hier Alkanolethoxylate genannt. Diese Formulierungen enthalten allerdings kein Verdickungsmittel.

Nachteil der in WO 05/084441 beschriebenen ölbasierten Suspensionskonzentrate von cyclischen Ketoenolen ist, dass diese Formulierungen insbesondere bei Temperaturen unter 10°C eine sehr hohe Viskosität zeigen. Vorteil der hohen Viskosität der ölbasierten Suspensionskonzentrate ist, dass durch eine hohe Viskosität das Sedimentieren der Suspensionsteilchen im Konzentrat vermieden werden kann. Der starke Anstieg bei niedrigen Temperaturen führt aber dazu, dass die Produkte bei der Anwendung unter solchen Bedingungen schlecht aus der Verpackung fließen. Weiterhin ist das Ansetzen der Spritzbrühe mit hoch viskosen Formulierungen problematisch.

Der vorliegenden Erfindung liegt daher die Aufgabe zugrunde stabile, lagerbare, ölbasierte Suspensionskonzentrate ohne Zugabe von Verdickungsmittel zu entwickeln, welche im Allgemeinen und insbesondere bei Temperaturen unter 10°C eine niedrige Viskosität zeigen und deshalb für den Anwender gut applizierbar sind.

Es wurden nun neue Suspensionskonzentrate auf Ölbasis gefunden, die
- mindestens eine bei Raumtemperatur feste Verbindung der Formel (I) 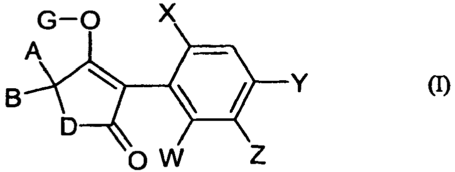 in welcher
   - X: für Halogen, Alkyl, Alkoxy, Halogenalkyl, Halogenalkoxy oder Cyano steht,
   - W, Y und Z: unabhängig voneinander für Wasserstoff, Halogen, Alkyl, Alkoxy, Halogenalkyl, Halogenalkoxy oder Cyano stehen,
   - A: für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
   - B: für Wasserstoff oder Alkyl steht, oder
   - A und B: gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
   - D: für NH oder Sauerstoff steht,
   - G: für Wasserstoff (a) oder für eine der Gruppen 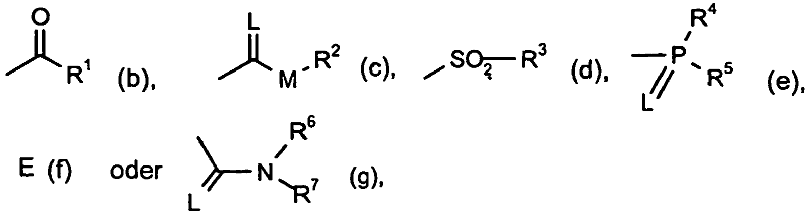 steht,
   worin
   - E: für ein Metallion oder ein Ammoniumion steht,
   - L: für Sauerstoff oder Schwefel steht,
   - M: für Sauerstoff oder Schwefel steht,
   - R¹: für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
   - R²: für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
   - R³: für gegebenenfalls durch Halogen substituiertes Alkyl oder gegebenenfalls substituiertes Phenyl steht,
   - R⁴ und R⁵: unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen und
   - R⁶ und R⁷: unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen
   in Form ihrer Isomerengemische oder reinen Isomeren,
- mindestens einen Penetrationsförderer der Formel (II)

   R⁸-O-(-PO-)_{q}-(-EO-)-ₚ- R⁹ (II)

   in welcher
   - R⁸: für geradkettiges oder verzweigtes Alkyl mit 4 bis 20 Kohlenstoffatomen steht,
   - R⁹: für H, Methyl, Ethyl, n-Propyl, i-Propyl, n-Butyl, i-Butyl, t-Butyl, n-Pentyl oder n-Hexyl steht,
   - EO: für CH₂-CH₂-O- steht,
   - PO: für 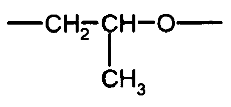 steht,
   - p: für Zahlen von 4 bis 8 steht und
   - q: für Zahlen von 6 bis 10 steht,
- mindestens ein Pflanzenöl,
- mindestens ein nicht-ionisches Tensid ausgewählt aus
   - Polyethylenoxid-polypropylenoxid-4-butoxybuthylether,
   - Polyethylenglykolethern von linearen Alkoholen,
   - Umsetzungsprodukten von Fettsäuren mit Ethylenoxid und
   - Mischungen dieser vorgenannten Tenside und/oder
- mindestens ein anionisches Tensid und
- gegebenenfalls einen oder mehrere Zusatzstoffe aus den Gruppen der Emulgiermittel, Spreitmittel, der schaumhemmenden Mittel, der Konservierungsmittel, der Antioxydantien, der Farbstoffe und/oder der inerten Füllmaterialien (Materialien welche die Viskosität der Formulierung nicht beeinflussen)
enthalten.

Weiterhin wurde gefunden, dass sich die erfindungsgemäßen Suspensionskonzentrate auf Ölbasis herstellen lassen, indem man die oben angegebenen Inhaltsstoffe miteinander vermischt und die entstehende Suspension gegebenenfalls anschließend mahlt.

Schließlich wurde gefunden, dass sich die erfindungsgemäßen Suspensionskonzentrate auf Ölbasis sehr gut zur Applikation der enthaltenen Verbindungen der Formel (I) auf Pflanzen und/oder deren Lebensraum eignen.

Desweiteren wurde gefunden, dass sich die erfindungsgemässen Suspensionskonzentrate auf Ölbasis sehr gut zur Bekämpfung von Insekten eignen.

Es ist als äußert überraschend zu bezeichnen, dass die erfindungsgemäßen Suspensionskonzentrate auf Ölbasis eine deutlich niedrigere Viskosität, insbesondere bei Temperaturen unter 10 °C, zeigen im Vergleich zu den am ähnlichsten zusammengesetzten, vorbekannten Formulierungen. Dieser Effekt war aufgrund des vorbeschriebenen Standes der Technik nicht vorhersehbar. Weiterhin ist es sehr überraschend, dass die biologische Wirkung der erfmdungsgemäßen Suspensionskonzentrate auf Ölbasis besser ist als die der am ähnlichsten zusammengesetzten, vorbekannten Formulierungen. Letztlich ist es auch überraschend, daß die Pflanzenverträglichkeit der Formulierungen verbessert worden ist, obwohl die Aufnahme der Wirkstoff in der Pflanze gesteigert worden ist.

Bevorzugte, besonders bevorzugt, ganz besonders bevorzugt, insbesondere bevorzugte und hervorgehobene Substituentendefinitionen für Verbindungen der Formel (I) werden im Folgenden erläutert:
- W: steht bevorzugt für Wasserstoff, C₁-C₄-Alkyl, C₁-C₄-Alkoxy, Chlor, Brom oder Fluor,
- X: steht bevorzugt für C₁-C₄-Alkyl, C₁-C₄-Alkoxy, C₁-C₄-Halogenalkyl, Fluor, Chlor oder Brom,
- Y und Z: stehen unabhängig voneinander bevorzugt für Wasserstoff, C₁-C₄-Alkyl, Halogen, C₁-C₄-Alkoxy oder C₁-C₄-Halogenalkyl,
- A: steht bevorzugt für Wasserstoff oder jeweils gegebenenfalls durch Halogen substituiertes C₁-C₆-Alkyl oder C₃-C₈-Cycloalkyl,
- B: steht bevorzugt für Wasserstoff, Methyl oder Ethyl,
- A, B: und das Kohlenstoffatom an das sie gebunden sind, stehen bevorzugt für gesättigtes C₃-C₆-Cycloalkyl, worin gegebenenfalls ein Ringglied durch Sauerstoff oder Schwefel ersetzt ist und welches gegebenenfalls einfach oder zweifach durch C₁-C₄-Alkyl, Trifluormethyl oder C₁-C₄-Alkoxy substituiert ist,
- D: steht bevorzugt für NH oder Sauerstoff,
- G: steht bevorzugt für Wasserstoff (a) oder für eine der Gruppen 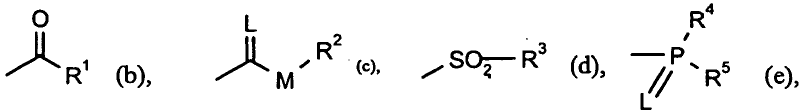 E^{(f)} oder 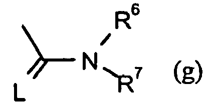 insbesondere für (a), (b), (c) oder (g) in welchen
- E: für ein Metallion oder ein Ammoniumion steht,
- L: für Sauerstoff oder Schwefel steht und
- M: für Sauerstoff oder Schwefel steht,
- R¹: bevorzugt für jeweils gegebenenfalls durch Halogen substituiertes C₁-C₁₀-Alkyl, C₂-C₁₀-Alkenyl, C₁-C₄-Alkoxy-C₁-C₄-alkyl, C₁-C₄-Alkylthio-C₁-C₄-alkyl oder gegebenenfalls durch Fluor, Chlor, C₁-C₄-Alkyl oder C₁-C₂-Alkoxy substituiertes C₃-C₆-Cycloalkyl,
für gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl,
für jeweils gegebenenfalls durch Chlor oder Methyl substituiertes Pyridyl oder Thienyl stehyt,
- R²: bevorzugt für jeweils gegebenenfalls durch Fluor oder Chlor substituiertes C₁-C₁₀-Alkyl, C₂-C₁₀-Alkenyl, C₁-C₄-Alkoxy-C₂-C₄-alkyl, für gegebenenfalls durch Methyl oder Methoxy substituiertes C₅-C₆-Cycloalkyl oder
für jeweils gegebenenfalls durch Fluor, Chlor, Brom, Cyano, Nitro, C₁-C₄-Alkyl, C₁-C₄-Alkoxy, Trifluormethyl oder Trifluormethoxy substituiertes Phenyl oder Benzyl steht,
- R³: bevorzugt für gegebenenfalls durch Fluor substituiertes C₁-C₄-Alkyl oder für gegebenenfalls durch Fluor, Chlor, Brom, C₁-C₄-Alkyl, C₁-C₄-Alkoxy, Trifluormethyl, Trifluormethoxy, Cyano oder Nitro substituiertes Phenyl steht,
- R⁴: bevorzugt für jeweils gegebenenfalls durch Fluor oder Chlor substituiertes C₁-C₄-Alkyl, C₁-C₄-Alkoxy, C₁-C4-Alkylamino, C₁-C₄-Alkylthio oder für jeweils gegebenenfalls durch Fluor, Chlor, Brom, Nitro, Cyano, C₁-C₄-Alkoxy, Trifluormethoxy, C₁-C₄-Alkylthio, C₁-C₄-Halogenalkylthio, C₁-C₄-Alkyl oder Trifluormethyl substituiertes Phenyl, Phenoxy oder Phenylthio steht,
- R⁵: bevorzugt für C₁-C₄-Alkoxy oder C₁-C₄-Thioalkyl steht,
- R⁶: bevorzugt für C₁-C₆-Alkyl, C₃-C₆-Cycloalkyl, C₁-C₆-Alkoxy, C₃-C₆-Alkenyl oder C₁-C₄-Alkoxy-C₁-C₄-alkyl steht,
- R⁷: bevorzugt für C₁-C₆-Alkyl, C₃-C₆-Alkenyl oder C₁-C₄-Alkoxy-C₁-C₄-alkyl steht,
- R⁶ und R⁷: zusammen bevorzugt für einen gegebenenfalls durch Methyl oder Ethyl substituierten C₃-C₆-Alkylenrest, in welchem gegebenenfalls ein Kohlenstoffatom durch Sauerstoff oder Schwefel ersetzt ist, stehen
in Form ihrer Isomerengemische oder reinen Isomeren.
- W: steht besonders bevorzugt für Wasserstoff, Methyl, Ethyl, Chlor, Brom oder Methoxy,
- X: steht besonders bevorzugt für Chlor, Brom, Methyl, Ethyl, Propyl, i-Propyl, Methoxy, Ethoxy oder Trifluormethyl,
- Y und Z: stehen besonders bevorzugt unabhängig voneinander für Wasserstoff, Fluor, Chlor, Brom, Methyl, Ethyl, Propyl, i-Propyl, Trifluormethyl oder Methoxy,
- A: steht besonders bevorzugt für Methyl, Ethyl, Propyl, i-Propyl, Butyl, i-Butyl, sec.-Butyl, tert.-Butyl, Cyclopropyl, Cyclopentyl oder Cyclohexyl,
- B: steht besonders bevorzugt für Wasserstoff, Methyl oder Ethyl,
oder
- A, B: und das Kohlenstoffatom an das sie gebunden sind, stehen besonders bevorzugt für gesättigtes C₅-C₆-Cycloalkyl, worin gegebenenfalls ein Ringglied durch Sauerstoff ersetzt ist und welches gegebenenfalls einfach durch Methyl, Ethyl, Trifluormethyl, Methoxy, Ethoxy, Propoxy oder Butoxy substituiert ist,
- D: steht besonders bevorzugt für NH oder Sauerstoff,
- G: steht besonders bevorzugt für Wasserstoff (a) oder für eine der Gruppen 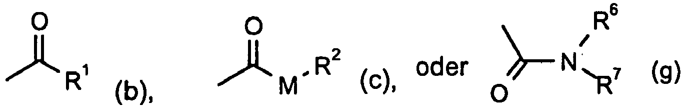 in welchen
- M: für Sauerstoff oder Schwefel steht,
- R¹: besonders bevorzugt für C₁-C₈-Alkyl, C₂-C₄-Alkenyl, Methoxymethyl, Ethoxymethyl, Ethylthiomethyl, Cyclopropyl, Cyclopentyl oder Cyclohexyl, für gegebenenfalls einfach bis zweifach durch Fluor, Chlor, Brom, Cyano, Nitro, Methyl, Ethyl, Methoxy, Trifluormethyl oder Trifluormethoxy substituiertes Phenyl,
für jeweils gegebenenfalls durch Chlor oder Methyl substituiertes Pyridyl oder Thienyl steht,
- R²: besonders bevorzugt für C₁-C₈-Alkyl, C₂-C₄-Alkenyl, Methoxyethyl, Ethoxyethyl oder für Phenyl oder Benzyl steht,
- R⁶ und R⁷: unabhängig voneinander besonders bevorzugt für Methyl, Ethyl oder zusammen für einen C₅-Alkylenrest, in welchem die C₃-Methylengruppe durch Sauerstoff ersetzt ist, stehen,
in Form ihrer Isomerengemische oder reinen Isomeren.
- W: steht ganz besonders bevorzugt für Wasserstoff oder Methyl,
- X: steht ganz besonders bevorzugt für Chlor, Brom oder Methyl,
- Y und Z: stehen ganz besonders bevorzugt unabhängig voneinander für Wasserstoff, Chlor, Brom oder Methyl,
- A, B: und das Kohlenstoffatom an das sie gebunden sind, stehen ganz besonders bevorzugt für gesättigtes C₅-C₆-Cycloalkyl, in welchem gegebenenfalls ein Ringglied durch Sauerstoff ersetzt ist und welches gegebenenfalls einfach durch Methyl, Trifluormethyl, Methoxy, Ethoxy, Propoxy oder Butoxy substituiert ist,
- D: steht ganz besonders bevorzugt für NH oder Sauerstoff,
- G: steht ganz besonders bevorzugt für Wasserstoff (a) oder für eine der Gruppen 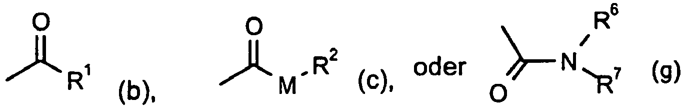 in welchen
- M: für Sauerstoff oder Schwefel steht,
- R¹: ganz besonders bevorzugt für C₁-C₈-Alkyl, C₂-C₄-Alkenyl, Methoxymethyl, Ethoxymethyl, Ethylthiomethyl, Cyclopropyl, Cyclopentyl, Cyclohexyl oder
für gegebenenfalls einfach durch Fluor, Chlor, Brom, Methyl, Methoxy, Trifluormethyl, Trifluormethoxy, Cyano oder Nitro substituiertes Phenyl,
für jeweils gegebenenfalls durch Chlor oder Methyl substituiertes Pyridyl oder Thienyl steht,
- R²: ganz besonders bevorzugt für C₁-C₈-Alkyl, C₂-C₄-Alkenyl, Methoxyethyl, Ethoxyethyl, Phenyl oder Benzyl steht,
- R⁶ und R⁷: unabhängig voneinander ganz besonders bevorzugt für Methyl, Ethyl oder zusammen für einen C₅-Alkylenrest, in welchem die C₃-Methylengruppe durch Sauerstoff ersetzt ist, stehen
in Form ihrer Isomerengemische oder reinen Isomeren.
Insbesondere bevorzugt sind Suspensionskonzentrate enthaltend Verbindungen der Formel (I) aus folgenden Patenten/Patentanmeldungen, die auf Seite 1 zitiert sind, in welchen die Reste A, B, D, G, W, X, Y, Z, R¹, R², R⁶ und R⁷ die in den ganz besonders bevorzugten Bereichen genannte Bedeutung haben: WO 98/05638, WO 04/007448.

Hervorgehoben aus diesen Anmeldungen sind die folgenden Verbindungen der Formel (I) 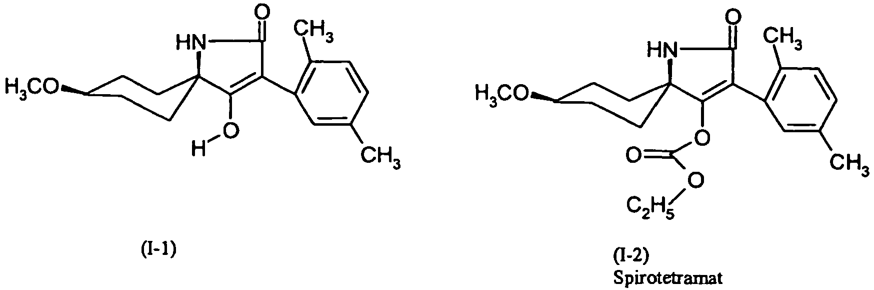 für erfindungsgemäße Suspensionskonzentrate einsetzbar.

Als Penetrationsförderer kommen im vorliegenden Zusammenhang bestimmte Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die nachher und in der Literatur (Baur et al., 1997, Pesticide Science 51, 131-152) beschriebene Methode kann zur Bestimmung dieser Eigenschaft eingesetzt werden.

Geeignet sind Alkanol-alkoxylate der Formel (II)

R⁸-O-(-PO-)_{q}-(-EO-)ₚ- R⁹ (II)

in welcher
- R⁸: für geradkettiges oder verzweigtes Alkyl mit 4 bis 20 Kohlenstoffatomen steht,
- R⁹: für H, Methyl, Ethyl, n-Propyl, i-Propyl, n-Butyl, i-Butyl, t-Butyl, n-Pentyl oder n-Hexyl steht,
- EO: für CH₂-CH₂-O- steht,
- PO: für 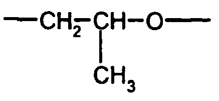 steht,
- p: für Zahlen von 4 bis 8 steht und
- q: für Zahlen von 6 bis 10 steht.

In den zuvor angegebenen Formeln steht
- R⁸: bevorzugt für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl und besonders bevorzugt für n-Hexyl, i-Hexyl, n-Octyl, i-Octyl, 2-Ethyl-hexyl, Nonyl, i-Nonyl, oder Decyl und ganz besonders bevorzugt für 2-Ethyl-hexyl.

In den zuvor angegebenen Formeln steht
- R⁹: bevorzugt für H, Methyl, Ethyl, n-Propyl oder i-Propyl und
besonders bevorzugt für H.

Als hervorgehobenes Beispiel für ein Alkanol-Alkoxylat der Formel (II) sei 2-Ethyl-hexyl-alkoxylat der Formel (II-1), 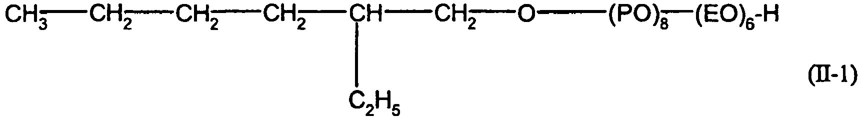 in welcher EO und PO die oben angegebenen Bedeutungen haben und die Zahlen 8 und 6 Durchschnittswerte darstellen, genannt.

Die Alkanol-alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-alkoxylate der angegebenen Formeln sind bekannt und kommerziell erhältlich oder lassen sich nach bekannten Methoden herstellen.

Als Pflanzenöle kommen alle üblicherweise in agrochemischen Mitteln einsetzbaren, aus Pflanzen gewinnbaren Öle in Frage. Es handelt sich dabei um bei Raumtemperatur flüssige Pflanzenöle. Beispielhaft genannt seien Sonnenblumenöl, Rapsöl, Maisöl, Olivenöl und Sojabohnenöl. Weiterhin seien Baumwollsaatöl, Rübsenöl, Kokosöl, Erdnussöl, Mandelöl, Sesamöl, Walnussöl und Hanföl genannt.

Bevorzugt seien folgende Öle genannt Rapsöl, Maisöl, Sojabohnenöl und Sonnenblumenöl.

Ganz besonders bevorzugt sind folgende Öle: Maisöl, Sojabohnenöl und Sonnenblumenöl.

Insbesondere bevorzugt ist Sonnenblumenöl.

Die erfindungsgemäßen Suspensionskonzentrate auf Ölbasis enthalten mindestens ein nicht-ionisches Tensid und/oder mindestens ein anionisches Tensid.

Als nicht-ionische Tenside kommen Polyethylenoxid-polypropylenoxid-4-butoxybuthylether, Polyethylenglykolether von linearen Alkoholen, Umsetzungsprodukte von Fettsäuren mit Ethylenoxid und Mischungen dieser Tenside in Betracht. Bevorzugt enthalten die erfindungsgemäßen Zusammensetzungen ein Gemisch aus 5-9-fach polyethoxyliertem (C₁₂-₁₅) Fettalkohol und einem propoxylierten und ethoxylierten 4-Butoxybutyl-alkohol und wenigstens ein weiteres der genannten nicht-ionischen Tenside.

Als anionische Tenside kommen in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure in Betracht. Bevorzugt sind Salze von Naphthalinsulfonsäure-Formaldehyd-Kondensationsprodukten.

Als Zusatzstoffe, die in den erfindungsgemäßen Formulierungen enthalten sein können, kommen Emulgatoren, Spreitmittel, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. - ethoxy-propoxylate, wobei Sorbitan-Derivate, Polyethylenoxid-Sorbitan-Fettsäureester und Sorbitan-Fettsäureester beispielhaft genannt seien. Bevorzugt sei Polyoxyethylen-sorbitol-oleat genannt.

Als Spreitmittel kommen alle üblicherweise für diesen Zweck in agrochemischen Mitteln einsetzbaren Substanzen in Betracht. Bevorzugt sind Alkylsiloxane.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist 2,6-Di-tert-butyl-4-methylphenol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Der Gehalt an den einzelnen Komponenten kann in den erfindungsgemäßen Suspensionskonzentraten auf Ölbasis innerhalb eines größeren Bereiches variiert werden. So liegen die Konzentrationen
- an Verbindung der Formel (I) im allgemeinen zwischen 5 und 30 Gew.-%, vorzugsweise zwischen 10 und 25 Gew.-%, besonders bevorzugt zwischen 10 und 20 Gew.-% , ganz besonders bevorzugt zwischen 10 und 18 Gew.%, weiterhin zwischen 5 und 12 Gew.-%,
- an Penetrationsförderer im allgemeinen zwischen 5 und 30 Gew.%, vorzugsweise zwischen 15 und 25 Gew.%, besonders bevorzugt zwischen 17 und 22 Gew.-%,
- an Pflanzenöl im allgemeinen zwischen 20 und 55 Gew.%, vorzugsweise zwischen 25 und 52 Gew.%, besonders bevorzugt zwischen 25 und 50 Gew.-%,
- an Tensiden im allgemeinen zwischen 1 und 25 Gew.%, vorzugsweise zwischen 1,0 und 15 Gew.-%, ganz vorzugsweise zwischen 1,5 und 5 Gew.-% und
- an Zusatzstoffen im allgemeinen zwischen 0 und 25 Gew.-%, vorzugsweise zwischen 0 und 20 Gew.-%.

Die Herstellung der erfindungsgemäßen Suspensionskonzentrate auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C. Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt nach üblichen Methoden, also zum Beispiel durch Verspritzen, Gießen oder Injizieren.

Die Aufwandmenge an den erfindungsgemäßen Suspensionskonzentraten auf Ölbasis kann innerhalb eines größeren Bereiches variiert werden. Sie richtet sich nach den jeweiligen agrochemischen Wirkstoffen und nach deren Gehalt in den Zusammensetzungen.

Die erfindungsgemäßen Zusammensetzungen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Omithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnostema consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heteraltis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichwis trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Cameocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Die erfindungsgemäßen Zusammensetzungen eignen sich zur Bekämpfung von tierischen Schädlingen, insbesondere den saugenden Insekten, wie beispielsweise Thrips spp., Aphids spp., Psylla spp., Skales spp., Weisse Fliege.

Die erfindungsgemäßen Zusammensetzungen können neben den bereits zuvor genannten agrochemischen Wirkstoffen als Mischungspartner weitere Wirkstoffe wie Insektizide, Lockstoffe, Sterilantie, Bakterizide, Akarizide, Nematizide, Fungizide, wachstumsregulierende Stoffe, Herbizide, Safener, Düngemittel oder Semiochemicals enthalten.

Die in dieser Beschreibung mit ihrem "common name" genannten Wirkstoffe sind beispielsweise aus "The Pesticide Manual" 13th Ed., British Crop Protection Council 2003, und der Webseite http://www.alanwood.net/pesticides/ bekannt.

### Acetyleholinesterase (AChE) Inhibitoren II-1

II-1.A Carbamate,
   zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15), Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)
GABA-gesteuerte Chlorid-Kanal-Antagonisten II-2
II-2B Fiprole (Phenylpyrazole), zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)
Natrium-Kanal-Modulatoren / Spannungsabhängige Natrium-Kanal-Blocker II-3
II-3 Pyrethroide,
   zum Beispiel Acrinathrin (II-3-1), Allethrin (d-cis-trans, d-trans) (II-3-2), Beta-Cyfluthrin (II-3-3), Bifenthrin (II-3-4), Bioallethrin (II-3-5), Bioallethrin-S-cyctopentyl-isomer (II-3-6), Bioethanomethrin (II-3-7), Biopermethrin (II-3-8), Bioresmethrin (II-3-9), Chlovaporthrin (II-3-10), Cis-Cypermethrin (II-3-11), Cis-Resmethrin (II-3-12), Cis-Permethrin (II-3-13), Clocythrin (II-3-14), Cycloprothrin (II-3-15), Cyfluthrin (II-3-16), Cyhalothrin (II-3-17), Cypermethrin (alpha-, beta-, theta-, zeta-)(II-3-18), Cyphenothrin (II-3-19), Deltamethrin (II-3-20), Empenthrin (1R-isomer) (II-3-21), Esfenvalerate (II-3-22), Etofenprox (II-3-23), Fenfluthrin (II-3-24), Fenpropathrin (II-3-25), Fenpyrithrin (II-3-26), Fenvalerate (II-3-27), Flubrocythrinate (II-3-28), Flucythrinate (II-3-29), Flufenprox (II-3-30), Flumethrin (II-3-31), Fluvalinate (II-3-32), Fubfenprox (II-3-33), Gamma-Cyhalothrin (II-3-34), Imiprothrin (II-3-35), Kadethrin (II-3-36), Lambda-Cyhalothrin (II-3-37), Metofluthrin (II-3-38), Permethrin (cis-, trans-) (II-3-39), Phenothrin (1R-trans isomer) (II-3-40), Prallethrin (II-3-41), Profluthrin (II-3-42), Protrifenbute (II-3-43), Pyresmethrin (II-3-44), Resmethrin (II-3-45), RU 15525 (II-3-06), Silafluofen (II-3-47), Tau-Fluvalinate (II-3-48), Tefluthrin (II-3-49), Terallethrin (II-3-50), Tetramethrin (-1R- isomer) (II-3-51), Tralomethrin (II-3-52), Transfluthrin (II-3-53), ZXI 8901 (II-3-54), Pyrethrin (pyrethrum) (II-3-55), Eflusilanat (II-3-56),
   DDT (II-3-57),
   Methoxychlor (II-3-58),
Nikotinerge Acetylcholin-Rezeptor-Agonisten/-Antagonisten II-4
II-4A Chloronicotinyle,
   zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazine (II-4A-7), Thiacloprid (II-4A-8), Thiamethoxam (II-4A-9), 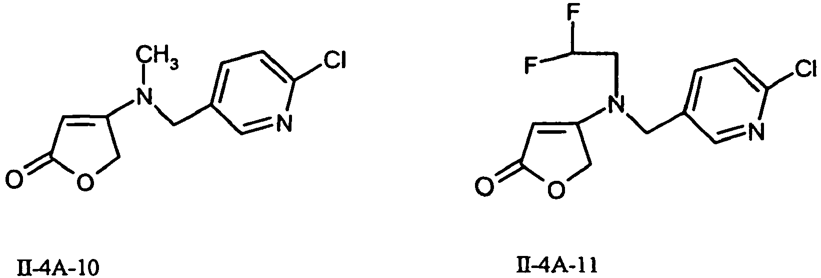
II-4B Nicotine (II-4B-1), Bensultap (II-4B-2), Cartap (II-4B-3), Thiosulfap-Natrium (II-4B-4), Thiocylam (II-4C-4)
   Allosterische Acetylcholin-Rezeptor-Modulatoren (Agonisten)
II-5 Spinosyne,
   zum Beispiel Spinosad (II-5-1), Spinetoram (II-5-2)
   Chlorid-Kanal-Aktivatoren
II-6 Mectine / Macrolide,
   zum Beispiel Abamectin (II-6-1), Emamectin (II-6-2), Emamectin-benzoate (II-6-3), Ivermectin (II-6-4), Lepimectin (II-6-5), Milbemectin (II-6-6)
II-7A Juvenilhormon Analoge,
   zum Beispiel Hydroprene (II-7A-1), Kinoprene (II-7A-2), Methoprene (II-7A-3), Epofenonane (II-7A-4), Triprene (II-7A-5), Fenoxycarb (II-7B-1),
   Pyriproxifen (II-7C-1), Diofenolan (II-7C-2)
   Wirkstoffe mit unbekannten oder nicht spezifischen Wirkmechanismen
II-8 Begasungsmittel,
   zum Beispiel Methyl bromide (II-8A-1), Chloropicrin (II-8B-1), Sulfuryl fluoride (II-8C-1)
II-9 Selektive Fraßhemmer,
   zum Beispiel Cryolite (II-9A-1), Pymetrozine (II-9B-1), Pyrifluquinazon (NNI0101) (II-9B-2) , Flonicamid (II-9C-1)
II-10 Milbenwachstumsinhibitoren,
   zum Beispiel Clofentezine (II-10A-1), Hexythiazox (II-10A-2), ), Etoxazole (II-10B-1),
   Inhibitoren der oxidativen Phosphorylierung, ATP-Disruptoren II-12
II-12A Diafenthiuron (II-12A-1)
II-12B Organozinnverbindungen,
   zum Beispiel Azocyclotin (II-12B-1), Cyhexatin (II-12B-2), Fenbutatin-oxide (II-12B-3)
II-12C Propargite (II-12C-1), Tetradifon (II-12C-2)
Entkoppler der oxidativen Phoshorylierung durch Unterbrechung des H-Protongradienten II-13
Chlorfenapyr (II-13-1)
Binapacyrl (II-13-2), Dinobuton (II-13-3), Dinocap (II-13-4), DNOC (II-13-5)
Mikrobielle Disruptoren der Insektendarmmembran
Bacillus thuringiensis-Stämme (II-13-6)
Inhibitoren der Chitinbiosynthese
II-15 Benzoylharnstoffe,
   zum Beispiel Bistrifluron (II-15-1), Chlorfluazuron (II-15-2), Diflubenzuron (II-15-3), Fluazuron (II-15-4), Flucycloxuron (II-15-5), Flufenoxuron (II-15-6), Hexaflumuron (II-15-7), Lufenuron (II-15-8), Novaluron (II-15-9), Noviflumuron (II-15-10), Penfluron (II-15-11), Teflubenzuron (II-15-12), Triflumuron (II-15-13)
II-16 Buprofezin (II-16-1)
   Häutungsstörende Wirkstoffe Cyromazine (II-17-1)
   Ecdysonagonisten/disruptoren (II-18)
II-18A Diacylhydrazine,
   zum Beispiel Chromafenozide (II-18A-1), Halofenozide (II-18A-2), Methoxyfenozide (II-18A-3), Tebufenozide (II-18A-4), JS-118 (II-18A-5)
   Azadirachtin (II-18B-1)
Oktopaminerge Agonisten
   zum Beispiel Amitraz (II-19-1)
II-20 Seite-III-Elektronentransportinhibitoren/Seite-II-Elektronentransportinhibitoren
   Hydramethylnon (II-20A-1)
   Acequinocyl (II-20B-1)
   Fluacrypyrim (II-20C-1)
   Cyflumetofen (II-20D-1), Cyenopyrafen (II-20D-2)
Elektronentransportinhibitoren
II-21 Seite-I-Elektronentransportinhibitoren
   aus der Gruppe der METI-Akarizide,
   zum Beispiel Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)
II-22 Spannungsabhängige Natriumkanal-Blocker
   zum Beispiel Indoxacarb (II-22A-1)
   zum Beispiel Metaflumizone (BAS 320I) (II-22B-1)
II-23 Inhibitoren der Fettsäurebiosynthese
II-23A Tetronsäure-Derivate
   zum Beispiel Spirodiclofen (II-23A-1), Spiromesifen (II-23A-2)
II-23B Tetramsäure-Derivate,
   zum Beispiel Spirotetramat (II-23B-1)
II-25 Neuronale Inhibitoren mit unbekannten Wirkmechanismus
   Bifenazate (II-25-1)
Ryanodinrezeptor-Effektoren
II-28 Diamide,
   zum Beispiel Flubendiamide (II-28-1), 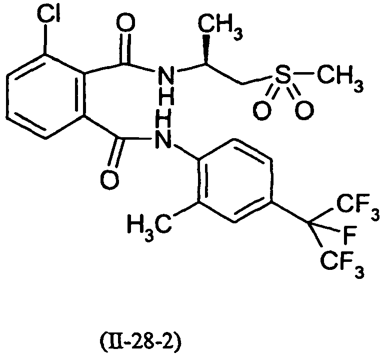
Rynaxapyr (II-28-3), HGW86 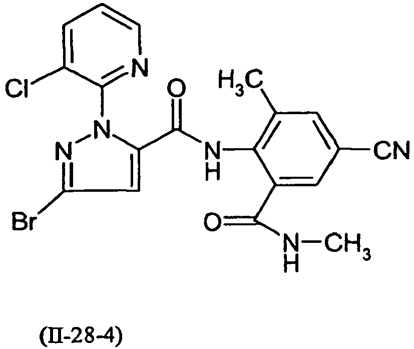
Cyazypyr
II-29 Wirkstoffe mit unbekanntem Wirkmechanismus
   Amidoflumet (II-29-1), Benclothiaz (II-29-2), Benzoximate (II-29-3), Bromopropylate (II-29-4), Buprofezin (II-29-5), Chinomethionat (II-29-6), Chlordimeform (II-29-7), Chlorobenzilate (II-29-8), Clothiazoben (II-29-9), Cycloprene (II-29-10), Dicofol (II-29-11), Dicyclanil (II-29-12), Fenoxacrim (II-29-13), Fentrifanil (II-29-14), Flubenzimine (II-29-15), Flufenerim (II-29-16), Flutenzin (II-29-17), Gossyplure (II-29-18), Japonilure (II-29-19), Metoxadiazone (II-29-20), Petroleum (II-29-21), Potassium oleate (II-29-22), Pyridalyl (II-29-23), Sulfluramid (II-29-24), Tetrasul (II-29-25), Triarathene (II-29-26),Verbutin (II-29-27).

Bevorzugt wird das erfindungsgemässe Suspensionskonzentrat enthaltend einen Wirkstoff der Formel (I-2) gemischt mit mindestens einem Insektizid ausgewählt aus der obigen Liste.

Ganz besonders bevorzugt wird das Suspensionskonzentrat enthaltend einen Wirkstoff der Formel (I-2) mit Insektiziden aus der Gruppe der Neonikotinyle gemischt, ausgewählt aus Imidacloprid (vgl. EP-A-192 060), Thiacloprid (vgl. EP-A-235 725), Acetamiprid (WO 91/04965), Nitenpyram (vgl. EP-A-302 389), Thiamethoxam (vgl. EP-A-580 533), Clothianidin (vgl. EP-A-376 279) und Dinotefuran (vgl. EP-A-649845).

Weiterhin ganz besonders bevorzugt wird das Suspensionskonzentrat enthaltend einen Wirkstoff der Formel (I-2) mit Insektiziden aus der Gruppe der Pyrethroide, gemischt.

Weiterhin ganz besonders bevorzugt wird das Suspensionskonzentrat enthaltend einen Wirkstoff der Formel (I-2) mit dem Insektizid Flubendiamide (II-28-1) gemischt.

Diese Wirkstoffe sind beispielsweise aus dem Pesticide Manual 13. Ausgabe bekannt.

Mit Hilfe der erfindungsgemäßen Suspensionskonzentrate auf Ölbasis lassen sich agrochemische Wirkstoffe in besonders vorteilhafter Weise auf Pflanzen und/oder deren Lebensraum ausbringen. Die enthaltenen agrochemischen Wirkstoffe entfalten dabei eine bessere biologische Wirksamkeit (insbesondere eine bessere insektizide Wirkung und/oder eine bessere Kulturpflanzenverträglichkeit) als bei Applikation in Form der entsprechenden herkömmlichen Formulierungen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Suspensionskonzentraten erfolgt direkt oder durch Einwirkung auf deren Umgebung, Lebensraum oder Lagerraum nach den üblichen Behandlungsmethoden, z.B. durch Tauchen, Sprühen, Spritzen, Verdampfen, Vernebeln, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehat, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps, Rüben, Zuckerrohr sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Suspensionskonzentraten behandelt werden. Die bei den Suspensionskonzentraten oben angegebenen Vorzugsbereiche gelten auch für die Behandlung dieser Pflanzen. Besonders hervorgehoben sei die Pflanzenbehandlung mit den im vorliegenden Text speziell aufgeführten Suspensionskonzentraten.

Außerdem wurde gefunden, daß die erfindungsgemäßen Zusammensetzungen eine hohe insektizide Wirkung gegen Insekten zeigen, die technische Materialien zerstören.

Beispielhaft und vorzugsweise - ohne jedoch zu limitieren - seien die folgenden Insekten genannt: Käfer wie Hylotrupes bajulus, Chlorophorus pilosis, Anobium punctatum, Xestobium rufovillosum, Ptilinus pecticornis, Dendrobium pertinex, Emobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Die Erfindung wird durch die folgenden Beispiele veranschaulicht, ohne dass diese dadurch begrenzt wird.

### Beispiele

### Herstellungsbeispiele

### Beispiel 1

Zur Herstellung eines Suspensionskonzentrates werden

| | |
|---|---|
| 150,0 g | der Verbindung der Formel (I-2) |
| 100,0 g | Arlatone T(V) |
| 30,0 g | Atlox 4894 |
| 5,0 g | Morwet D 425 |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 510,5 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 2

Zur Herstellung eines Suspensionskonzentrates werden

| | |
|---|---|
| 150,0 g | der Verbindung der Formel (I-2) |
| 100,0 g | Arlatone T(V) |
| 20,0 g | Atlox 4894 |
| 5,0 g | Morwet D 425 |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 520,5 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 3

Zur Herstellung eines Suspensionskonzentrates werden

| | |
|---|---|
| 150,0 g | der Verbindung der Formel (I-2) |
| 100,0 g | Arlatone T(V) |
| 10,0 g | Atlas G 5000 |
| 10,0 g | Synperonic A7 |
| 5,0 g | Morwet D 425 |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 520,5 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 4

Zur Herstellung eines Suspensionskonzentrates werden

| | |
|---|---|
| 150,0 g | der Verbindung der Formel (I-2) |
| 100,0 g | Arlatone T(V) |
| 10,0 g | Atlas G 5000 |
| 10,0 g | Synperonic A3 |
| 5,0 g | Morwet D 425 |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200,0 g | der Verbindung der Formel (II-1) und |
| 520,5 g | Sonnenblumenöl |

gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel I (WO 05/084441)

Zur Herstellung eines Suspensionskonzentrates werden

| | |
|---|---|
| 150,0 g | der Verbindung (I-2) |
| 100 g | Arlatone T(V) |
| 80 g | Zephrym PD 2206 |
| 20 g | Borresperse NA |
| 0,5 g | Silfoam SC 1132 |
| 2,0 g | wasserfreie Zitronensäure |
| 2,0 g | Vulkanox BHT |

unter Rühren bei Raumtemperatur in ein Gemisch aus

| | |
|---|---|
| 200 g | Alkanol-Alkoxylate der Formel (2) |

CH₃-(CH₂)ₜ-CH₂-O-(-CH₂-CH₂-O-)ᵤ-H (2)

in welcher
- t: für Zahlen von 9 bis 12 steht und
- u: für Zahlen von 7 bis 9 steht.
- 425,5 g: Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel II (Vergleichsbeispiel I aus WO 05/084441)

Zur Herstellung eines Suspensionkonzentrates werden

| | |
|---|---|
| 100 g | der Verbindung (I-2) |
| 100 g | Polyoxyethylen-sorbitol-oleat |
| 80 g | eines Gemisches aus Poly-alkoxylierten Alkoholen (Atlox 4894) |
| 20 g | Ligninsulfonat (Borresperse NA) |
| 0,5 g | Polydimethylsiloxan |
| 2,0 g | wasserfreie Zitronensäure |
| 2,0 g | 2-6-Di-tert-butyl-4-methylphenol |

unter Rühren bei Raumtemperatur in ein Gemisch aus

| | |
|---|---|
| 250 g | der Verbindung RO (EO)₈ (PO)₄-H |

in welcher
- R: für geradkettiges oder verzweigtes Alkyl mit 12 bis 15 Kohlenstoffatomen steht,
- EO: für CH₂-CH₂-O steht und
- PO: für 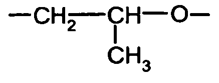 steht, und
- 450,0 g: Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

In den Beispielen werden folgende Produkte verwendet:

**Tabelle 1**

| Handelsname | Komposition | Lieferant |
|---|---|---|
| Arlatone T(V) | Polyoxyethylen-sorbitol-oleat | Croda |
| Atlas G 5000 | Propoxylierter und ethoxylierter 4-Butoxybutylalkohol | Croda |
| Atlox 4894 | Gemisch aus 5-9-fach polyethoxyliertem(C₁₂-₁₅) Fettalkohol und einem propoxylierten und ethoxylierten 4-Butoxybutylalkohol | Croda |
| Borresperse NA | Ligninsulfonat | Borregaard |
| Morwet D 425 | Naphthalinsulfonat | Akzo Nobel |
| Silfoam SC 1132 | Polydimethylsiloxan | Wacker Silicones |
| Synperonic A3 | Polyethoxylierter (1-4) Fettalkohol (C₁₂-₁₅) | Croda |
| Synperonic A7 | Polyethoxylierter (5-9) Fettalkohol (C₁₂-₁₅) | Croda |
| Vulkanox BHT | 2-6-Di-tert-butyl-4-methylphenol | Lanxess AG |
| Zephrym PD 2206 | Polyoxyalkylenamin-Derivat | Croda |
| | Octadecansäure, 12-Hydroxy-, polymer mit □-hydro-□-hydroxypoly(oxy-1,2-ethanediyl) | |

### Verwendungsbeispiel I: Viskosität der Formulierung in Abhängigkeit der Temperatur

Die komplexe Viskosität der Suspensionskonzentrates wird mit einem Viskositätsmessgerät Bohlin Gemini HR nano der Firma Malvern Instruments bestimmt, Messparameter: Frequenz 0,5 Hz und eine Soll-Deformation von 0,002. Die Temperatur wird zunächst innerhalb von 200 sec auf 20°C ins Gleichgewicht eingestellt und danach wird mit einem Gradienten von 1°C / Minute heruntergekühlt.

**Tabelle 2**

| Temperatur in °C | Komplexe Viskosität in Pas | | |
|---|---|---|---|
| | Beispiel I | Vergleichsbeispiel I | Vergleichsbeispiel II |
| 20 | 31,4 | 16,3 | 22,4 |
| 18,5 | 34,5 | 26,4 | |
| 16,5 | 39,0 | 9,0 | |
| 15 | 46,6 | 11,7 | |
| 13 | 63,6 | 35,7 | |
| 11 | 69,9 | 171,4 | |
| 10 | 69,9 | 366,8 | |
| 9 | 93,6 | 731,7 | |
| 8 | 97,1 | 1335,0 | |
| 7 | 100,8 | 2456,3 | |
| 6 | 106,1 | 3709,4 | 1200 |

### Verwendungsbeispiel II: Bestimmung der biologischen Wirkung

Zur Herstellung einer zweckmäßigen Präparatlösung verdünnt man 1 Gewichtsteil der formulierten Substanz mit Wasser auf die gewünschte Konzentration.

Birnbäume, die stark von *Psylla pyri* befallen sind, werden mit der Präparatelösung in der gewünschten Konzentration behandelt. Dabei bedeutet stark befallen, dass 40 Insekten per shoot (per Zweig) vorhanden sind.

Nach der gewünschten Zeit wird die Abtötung in % bestimmt. Dabei bedeutet 100 %, dass alle *Psylla Pyri* abgetötet wurden; 0 % bedeutet, dass keine Insekten abgetötet wurden.

Bei diesem Test zeigen beispielsweise die folgenden erfindungsgemässen Formulierungen eine überlegene Wirksamkeit gegenüber den aus dem Stand der Technik bekannten Formulierungen:

**Tabelle 3: Psylla Pyyri auf Birne - Test**

| **Formulierung** | **Konzentration** | **Abtötung** | **Abtötung** |
|---|---|---|---|
| | **in g/ha/m Kronenhöhe** | **in % nach 7 Tagen** | **in % nach 23 Tagen** |
| **Beispiel 1** | 45 | 69 | 79 |
| **Vergleichsbeispiel 1** | 45 | 64 | 56 |
| **Beispiel 1** | 75 | 79 | 79 |
| **Vergleichsbeispiel 1** | 75 | 73 | 78 |

### Verwendungsbeispiel III: Bestimmung der biologischen Wirkung

Zur Herstellung einer zweckmäßigen Präparatlösung verdünnt man 1 Gewichtsteil der formulierten Substanz mit Wasser auf die gewünschte Konzentration.

Zitrusbaume, die stark von *Skales* befallen sind, werden mit der Präparatelösung 3 mal (mit jeweils 2 Wochen Intervall zwischen den Spritzungen) mit je 45 g Wirkstoff / ha / m Kronenhöhe behandelt.

Nach der gewünschten Zeit wird die Qualität von 50 Zitrusfrüchten bestimmt. Dazu wurde die Zahl der sauberen, nicht befallenen Früchte bestimmt.

Bei diesem Test zeigen z. B. die folgenden erfindungsgemässen Formulierungen eine überlegene Wirksamkeit gegenüber den aus dem Stand der Technik bekannten Formulierungen:

**Tabelle 4: Skales auf Zitrus - Test**

| **Formulierung** | Saubere Früchte | Früchte mit 1 bis 5 *Skales* | Früchte mit mehr als 5 *Skales* |
|---|---|---|---|
| | nach 101 Tagen | nach 101 Tagen | nach 101 Tagen |
| **Beispiel 1** | 48 | 2 | 0 |
| **Vergleichsbeispiel 1** | 44 | 5 | 1 |

### Verwendungsbeispiel IV: Bestimmung der Pflanzenverträglichkeit

Zur Herstellung einer zweckmäßigen Präparatlösung verdünnt man 1 Gewichtsteil der formulierten Substanz mit Wasser auf die gewünschte Konzentration.

Birnbäume, die stark von *Psylla pyri* befallen sind, werden mit der Präparatelösung mit einer Konzentration von 96 g Wirkstoff / ha / m Kronenhöhe behandelt.

Nach der gewünschten Zeit werden die Pflanzenschäden (beispielsweise Nekrosen) in % bestimmt.

Bei diesem Test zeigen beispielsweise die folgenden erfindungsgemässen Formulierungen eine überlegene Wirksamkeit gegenüber den aus dem Stand der Technik bekannten Formulierungen:

**Tabelle 5: Pflanzenverträglichkeit auf Birne (cv. Packham's Triumph) - Test**

| **Formulierung** | Früchte mit Schäden (in %) | Früchte mit Schäden (in %) |
|---|---|---|
| | nach 28 Tage | nach 58 Tage |
| **Beispiel 1** | 2 | 18 |
| **Vergleichsbeispiel 1** | 10 | 23 |

## Patentansprüche

1. Suspensionskonzentrate auf Ölbasis, enthaltend
- mindestens eine bei Raumtemperatur feste Verbindung der Formel (I) 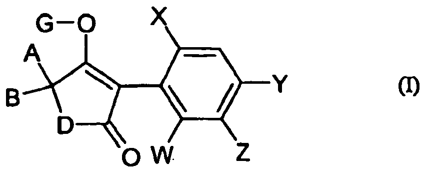 in welcher
X für Halogen, Alkyl, Alkoxy, Halogenalkyl, Halogenalkoxy oder Cyano steht,
W, Y und Z unabhängig voneinander für Wasserstoff, Halogen, Alkyl, Alkoxy, Halogenalkyl, Halogenalkoxy oder Cyano stehen,
A für Wasserstoff, jeweils gegebenenfalls durch Halogen substituiertes Alkyl, Alkoxyalkyl, gesättigtes, gegebenenfalls substituiertes Cycloalkyl steht, in welchem gegebenenfalls mindestens ein Ringatom durch ein Heteroatom ersetzt ist,
B für Wasserstoff oder Alkyl steht, oder
A und B gemeinsam mit dem Kohlenstoffatom an das sie gebunden sind, für einen gesättigten oder ungesättigten, gegebenenfalls mindestens ein Heteroatom enthaltenden unsubstituierten oder substituierten Cyclus stehen,
D für NH oder Sauerstoff steht,
G für Wasserstoff (a) oder für eine der Gruppen 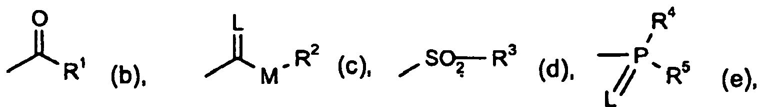 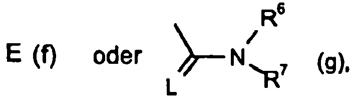 steht, worin
E für ein Metallion oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R³ für gegebenenfalls durch Halogen substituiertes Alkyl oder gegebenenfalls substituiertes Phenyl steht,
R⁴ und R⁵ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen und
R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl oder gemeinsam mit dem N-Atom, an das sie gebunden sind, für einen gegebenenfalls durch Sauerstoff oder Schwefel unterbrochenen gegebenenfalls substituierten Ring stehen
in Form ihrer Isomerengemische oder reinen Isomeren,
- mindestens einen Penetrationsförderer der Formel (II)
R⁸-O-(-PO-)ₚ-(-EO-)_{q}- R⁹ (II)
in welcher
R⁸ für geradkettiges oder verzweigtes Alkyl mit 4 bis 20 Kohlenstoffatomen steht,
R⁹ für H, Methyl, Ethyl, n-Propyl, i-Propyl, n-Butyl, i-Butyl, t-Butyl, n-Pentyl oder n-Hexyl steht,
EO für CH₂-CH₂-O- steht,
PO für 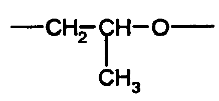 steht,
p für Zahlen von 4 bis 8 steht und
q für Zahlen von 6 bis 10 steht,
- mindestens ein Pflanzenöl,
- mindestens ein nicht-ionisches Tensid ausgewählt aus
- Polyethylenoxid-polypropylenoxid-4-butoxybuthylether,
- Polyethylenglykolethem von linearen Alkoholen,
- Umsetzungsprodukten von Fettsäuren mit Ethylenoxid und
- Mischungen dieser vorgenannten Tenside und/oder
- mindestens ein anionisches Tensid.

2. Suspensionskonzentrate gemäß Anspruch 1, **dadurch gekennzeichnet, dass** sie als Penetrationsförderer 2-Ethyl-hexyl-alkoxylat der Formel (II-1) 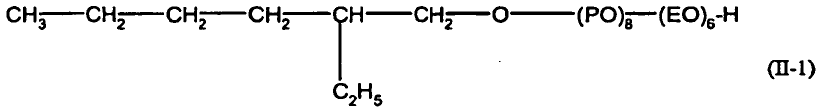 enthalten.

3. Suspensionskonzentrate gemäß einem oder mehreren der Ansprüche 1, 2, **dadurch gekennzeichnet, dass** sie als Pflanzenöl mindestens ein Öl ausgwählt aus Sonnenblumenöl, Rapsöl, Maisöl, Olivenöl und Sojabohnenöl enthalten.

4. Suspensionskonzentrate gemäß einem oder mehreren der Ansprüche 1, 2 oder 3, **dadurch gekennzeichnet, dass** sie als Pflanzenöl Sonnenblumenöl enthalten.

5. Suspensionskonzentrate gemäß einem oder mehreren der Ansprüche 1, 2, 3 oder 4, **dadurch gekennzeichnet, dass** sie Spirotetramat enthalten.

6. Suspensionskonzentrate gemäß einem oder mehreren der Ansprüche 1, 2, 3, 4 oder 5, **dadurch gekennzeichnet, dass** der Gehalt
- an Verbindung der Formel (I) zwischen 5 und 30 Gew.-%,
- an Penetrationsförderer der Formel (II) zwischen 5 und 30 Gew.-%,
- an Pflanzenöl zwischen 20 und 55 Gew.-%,
- an Tensiden zwischen 1 und 25 Gew.-%,
- an Zusatzstoffen zwischen 0 und 25 Gew.-%
liegt.

7. Verfahren zur Herstellung von Suspensionskonzentraten gemäß einem oder mehreren der Ansprüche 1, 2, 3, 4, 5 oder 6, **dadurch gekennzeichnet, dass** man die in Anspruch 1, 2, 3, 4, 5 und/oder 6 genannten Inhaltsstoffe sowie gegebenenfalls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien miteinander vermischt und die entstehende Suspension gegebenenfalls anschließend mahlt.

8. Verwendung von Suspensionskonzentraten gemäß einem oder mehreren der Ansprüche 1, 2, 3, 4, 5 oder 6 zur Applikation der enthaltenen Verbindungen der Formel (I) auf Pflanzen und/oder deren Lebensraum.

9. Verwendung von Suspensionskonzentraten gemäß einem oder mehreren der Ansprüche 1, 2, 3, 4, 5 oder 6 zur Bekämpfung von Insekten.

10. Mittel, **gekennzeichnet durch** einen Gehalt an einem Suspensionskonzentrat gemäß einem oder mehreren der Ansprüche 1, 2, 3, 4, 5 oder 6 und Streckmittel und/oder oberflächenaktiven Reagenzien.

## Claims

1. Oil-based suspension concentrates, comprising
- at least one compound, solid at room temperature, of the formula (I) 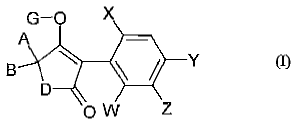 in which
X represents halogen, alkyl, alkoxy, haloalkyl, haloalkoxy or cyano,
W, Y and Z independently of one another represent hydrogen, halogen, alkyl, alkoxy, haloalkyl, haloalkoxy or cyano,
A represents hydrogen, in each case optionally halogen-substituted alkyl, alkoxyalkyl, saturated, optionally substituted cycloalkyl in which optionally at least one ring atom is replaced by a heteroatom,
B represents hydrogen or alkyl, or
A and B together with the carbon atom to which they are attached represent a saturated or unsaturated, unsubstituted or substituted cycle which optionally contains at least one heteroatom,
D represents NH or oxygen,
G represents hydrogen (a) or represents one of the groups 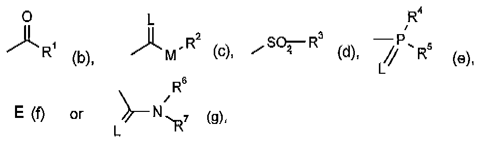 in which
E represents a metal ion or an ammonium ion,
L represents oxygen or sulphur,
M represents oxygen or sulphur,
R¹ represents in each case optionally halogen-substituted alkyl, alkenyl, alkoxyalkyl, alkylthioalkyl, polyalkoxyalkyl or optionally halogen-, alkyl- or alkoxy-substituted cycloalkyl which may be interrupted by at least one heteroatom, in each case optionally substituted phenyl, phenylalkyl, hetaryl, phenoxyalkyl or hetaryloxyalkyl,
R² represents in each case optionally halogen-substituted alkyl, alkenyl, alkoxyalkyl, polyalkoxyalkyl or represents in each case optionally substituted cycloalkyl, phenyl or benzyl,
R³ represents optionally halogen-substituted alkyl or optionally substituted phenyl,
R⁴ and R⁵ independently of one another represent in each case optionally halogen-substituted alkyl, alkoxy, alkylamino, dialkylamino, alkylthio, alkenylthio, cycloalkylthio or represent in each case optionally substituted phenyl, benzyl, phenoxy or phenylthio and
R⁶ and R⁷ independently of one another represent hydrogen, in each case optionally halogen-substituted alkyl, cycloalkyl, alkenyl, alkoxy, alkoxyalkyl, represent optionally substituted phenyl, represent optionally substituted benzyl or together with the nitrogen atom to which they are attached represent an optionally substituted ring which is optionally interrupted by oxygen or sulphur
- at least one penetrant of the formula (II)
R⁸-O-(-PO-)ₚ-(-EO-)_{q}- R⁹ (II)
in which
R⁸ represents straight-chain or branched alkyl having to 20 carbon atoms,
R⁹ represents H, methyl, ethyl, n-propyl, isopropyl, n-butyl, isobutyl, t-butyl, n-pentyl or n-hexyl,
EO represents CH₂-CH₂-O-,
PO represents 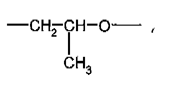
p represents a number from 4 to 8 and
q represents a number from 6 to 10,
- at least one vegetable oil,
- at least one nonionic surfactant selected from the group consisting of
- polyethylene oxide polypropylene oxide 4-butoxybutyl ether,
- polyethylene glycol ethers of straight-chain alcohols,
- products of the reaction of fatty acids with ethylene oxide and
- mixtures of these abovementioned surfactants and/or
- at least one anionic surfactant.

2. Suspension concentrates according to Claim 1, **characterized in that** they comprise, as penetrant, 2-ethylhexyl alkoxylate of the formula (II-1)

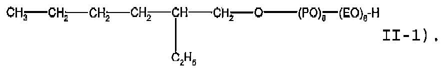

3. Suspension concentrates according to one or more of Claims 1 and 2, **characterized in that** they comprise, as vegetable oil, at least one oil selected from the group consisting of sunflower oil, rapeseed oil, maize oil, olive oil and soyabean oil.

4. Suspension concentrates according to one or more of Claims 1, 2 and 3, **characterized in that** they comprise, as vegetable oil, sunflower oil.

5. Suspension concentrates according to one or more of Claims 1, 2, 3 and 4, **characterized in that** they comprise spirotetramate.

6. Suspension concentrates according to one or more of Claims 1, 2, 3, 4 and 5, **characterized in that** the content
- of the compound of the formula (I) is from 5 to 30% by weight,
- of penetrant of the formula (II) is from 5 to 30% by weight,
- of vegetable oil is from 20 to 55% by weight,
- of surfactants is from 1 to 25% by weight,
- of additives is from 0 to 25% by weight.

7. Process for preparing suspension concentrates according to one or more of Claims 1, 2, 3, 4, 5 and 6, **characterized in that** the ingredients mentioned in Claims 1, 2, 3, 4, 5 and/or 6 and optionally one or more additives from the groups of the emulsifiers, the antifoams, the preservatives, the antioxidants, the colorants and/or the inert fillers are mixed with one another and the resulting suspension is then optionally ground.

8. Use of suspension concentrates according to one or more of Claims 1, 2, 3, 4, 5 and 6 for applying the compounds of the formula (I) comprised therein to plants and/or their habitat.

9. Use of suspension concentrates according to one or more of Claims 1, 2, 3, 4, 5 and 6 for controlling insects.

10. Compositions, **characterized in that** they comprise a suspension concentrate according to one or more of Claims 1, 2, 3, 4, 5 and 6 and extenders and/or surfactants.

## Revendications

1. Suspensions concentrées à base d'huile, contenant
- au moins un composé solide à température ambiante de formule (I) 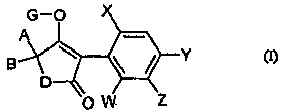 dans laquelle
X représente halogène, alkyle, alcoxy, halogénoalkyle, halogénoalcoxy ou cyano,
W, Y et Z représentent, indépendamment l'un de l'autre, hydrogène, halogène, alkyle, alcoxy, halogénoalkyle, halogénoalcoxy ou cyano,
A représente hydrogène ; alkyle, alcoxyalkyle chacun le cas échéant substitué par halogène ; cycloalkyle saturé le cas échéant substitué, dans lequel le cas échéant au moins un atome de cycle est remplacé par un hétéroatome,
B représente hydrogène ou alkyle, ou
A et B représentent, ensemble avec l'atome de carbone auquel ils sont liés, un cycle saturé ou insaturé, non substitué ou substitué, contenant le cas échéant au moins un hétéroatome,
D représente NH ou oxygène,
G représente hydrogène (a) ou un des groupes 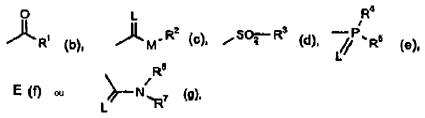
où
E représente un ion métallique ou un ion d'ammonium,
L représente oxygène ou soufre,
M représente oxygène ou soufre,
R¹ représente alkyle, alcényle, alcoxyalkyle, alkylthioalkyle, polyalcoxyalkyle à chaque fois le cas échéant substitué par halogène ; ou cycloalkyle le cas échéant substitué par halogène, alkyle ou alcoxy, qui peut être interrompu par au moins un hétéroatome ; phényle, phénylalkyle, hétaryle, phénoxyalkyle ou hétaryloxyalkyle à chaque fois le cas échéant substitué,
R² représente alkyle, alcényle, alcoxyalkyle, polyalcoxyalkyle à chaque fois le cas échéant substitué par halogène ; ou cycloalkyle, phényle ou benzyle à chaque fois le cas échéant substitué,
R³ représente alkyle le cas échéant substitué par halogène ou phényle le cas échéant substitué,
R⁴ et R⁵ représentent, indépendamment l'un de l'autre, alkyle, alcoxy, alkylamino, dialkylamino, alkylthio, alcénylthio, cycloalkylthio à chaque fois le cas échéant substitué par halogène ; ou phényle, benzyle, phénoxy ou phénylthio à chaque fois le cas échéant substitué, et
R⁶ et R⁷ représentent, indépendamment l'un de l'autre, hydrogène ; alkyle, cycloalkyle, alcényle, alcoxy, alcoxyalkyle à chaque fois le cas échéant substitué par halogène ; phényle le cas échéant substitué ; benzyle le cas échéant substitué ; ou ensemble avec l'atome de N auquel ils sont liés, un cycle le cas échéant interrompu par oxygène ou souffre, le cas échéant substitué
sous forme de ses mélanges d'isomères ou ses isomères purs,
- au moins un agent favorisant la pénétration de formule (II)
R⁸-O-(-PO-)ₚ-(-EO-)_{q}-R⁹ (II)
dans laquelle
R⁸ représente un alkyle linéaire ou ramifié comprenant 4 à 20 atomes de carbone,
R⁹ représente H, méthyle, éthyle, n-propyle, i-propyle, n-butyle, i-butyle, t-butyle, n-pentyle ou n-hexyle,
EO représente CH₂-CH₂-O-,
PO représente 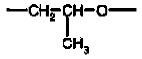
p représente des nombres de 4 à 8 et
q représente des nombres de 6 à 10
- au moins une huile végétale,
- au moins un agent tensioactif non ionique, choisi parmi
- le poly(oxyde d'éthylène-poly(oxyde de propyléne)-4-butoxybutyléther,
- les polyéthylèneglycoléthers d'alcools linéaires,
- les produits de transformation d'acides gras avec de l'oxyde d'éthylène et
- les mélanges des agents tensioactif susmentionnés et/ou
- au moins un agent tensioactif anionique.

2. Suspensions concentrées selon la revendications 1, **caractérisées en ce qu'**elles contiennent, comme agent favorisant la pénétration, un alcoxylate de 2-éthylhexyle de formule (II-1)

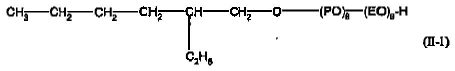

3. Suspensions concentrées selon l'une ou plusieurs des revendications 1, 2, **caractérisées en ce qu'**elles contiennent, comme huile végétale, au moins une huile choisie parmi l'huile de tournesol, l'huile de colza, l'huile de maïs, l'huile d'olive et l'huile de graines de soja.

4. Suspensions concentrées selon l'une ou plusieurs des revendications 1, 2 ou 3, **caractérisées en ce qu'**elles contiennent, comme huile végétale, de l'huile de tournesol.

5. Suspensions concentrées selon l'une ou plusieurs des revendications 1, 2, 3 ou 4, **caractérisées en ce qu'**elles contiennent du Spirotétramate.

6. Suspensions concentrées selon l'une ou plusieurs des revendications 1, 2, 3, 4 ou 5, **caractérisées en ce que** la teneur
- en composé de formule (I) se situe entre 5 et 30% en poids,
- en agent favorisant la pénétration de formule (II) se situe entre 5 et 30% en poids,
- en huile végétale se situe entre 20 et 55% en poids,
- en agents tensioactifs se situe entre 1 et 25% en poids,
- en additifs se situe entre 0 et 25% en poids.

7. Procédé pour la préparation de suspensions concentrées selon l'une ou plusieurs des revendications 1, 2, 3, 4, 5 ou 6, **caractérisé en ce qu'**on mélange les uns avec les autres les constituants mentionnés dans la revendication 1, 2, 3, 4, 5 et/ou 6 ainsi que le cas échéant un ou plusieurs additifs des groupes des émulsifiants, des antimousses, des conservateurs, des antioxydants, des colorants et/ou des matériaux de charge inertes et on broie ensuite le cas échéant la suspension obtenue.

8. Utilisation de suspensions concentrées selon l'une ou plusieurs des revendications 1, 2, 3, 4, 5 ou 6 pour l'application des composés de formule (I) contenus sur des plantes et/ou leur espace de vie.

9. Utilisation de suspensions concentrées selon l'une ou plusieurs des revendications 1, 2, 3, 4, 5 ou 6, pour lutteur contre les insectes.

10. Agent, **caractérisé par** une teneur en une suspension concentrée selon l'une ou plusieurs des revendications 1, 2, 3, 4, 5 ou 6 et en agents d'allongement et/ou en réactifs tensioactifs.
